Europäisches Patentamt

European Patent Office

Office européen des brevets

(11) Numéro de publication: **0 351 317**
**A1**

# DEMANDE DE BREVET EUROPEEN

(21) Numéro de dépôt: 89402008.0

(22) Date de dépôt: 12.07.89

(51) Int. Cl.⁵: **F 15 B 15/28**
**F 15 B 15/14**

(30) Priorité: 13.07.88 FR 8809587

(43) Date de publication de la demande:
17.01.90 Bulletin 90/03

(84) Etats contractants désignés:
AT BE CH DE ES GB IT LI NL SE

(71) Demandeur: **AUTOMAX**
**Z.A. Rue de Champ Chardon B.P. 5**
**F-41250 Mont-Pres-Chambord (FR)**

(72) Inventeur: **Casas, Alain, Raymond**
**350 Route de Chambord Huisseau-Sur-Cosson**
**F-41350 Vineuil (FR)**

(74) Mandataire: **Durand, Yves Armand Louis et al**
**CABINET WEINSTEIN 20, Avenue de Friedland**
**F-75008 Paris (FR)**

(54) Vérin perfectionné.

(57) La présente invention concerne un vérin perfectionné.

Ce vérin comprend un corps (1) constitué par deux flasques
(2) raccordés par un élément tubulaire (3) dans lequel coulisse
un piston (4) relié à une tige (5) elle-même montée coulissante
au travers d'un flasque (2), les extrémités de l'élément tubulaire
(3) qui est ovale en section transversale de même que le piston,
étant respectivement solidaires des flasques (2) par un double
sertissage, à savoir un sertissage des extrémités de l'élément
tubulaire sur les flasques et un sertissage (10) des flasques sur
ces extrémités.

Le vérin selon cette invention est un vérin très petit pouvant
réaliser des fonctions mécaniques quelconques.

Fig. 2

EP 0 351 317 A1

**Description**

### Vérin perfectionné

La présente invention se rapporte d'une manière générale aux vérins et concerne plus particulièrement un petit vérin pneumatique très perfectionné pouvant avoir des applications diverses.

On connait déjà depuis longtemps des vérins comprenant un corps constitué par deux flasques raccordés par un élément tubulaire dans lequel coulisse un piston relié à une tige ou analogue elle-même montée coulissante au travers d'au moins l'un des deux flasques, étant entendu que le corps comporte des orifices ou raccords permettant l'alimentation et la mise à l'échappement d'un fluide.

Pour réaliser le raccordement ou l'assemblage de l'élément tubulaire et des deux flasques, plusieurs solutions ont déjà été proposées.

C'est ainsi qu'un tel assemblage peut être réalisé par vissage de l'élément tubulaire sur les flasques ou par l'utilisation de tiges filetées ou tirants serrant les deux flasques contre les extrémités de l'élément tubulaire interposé entre eux.

On a aussi proposé des vérins constitués d'un corps tubulaire monobloc dont l'une des extrémités est ouverte et peut éventuellement comporter un flasque délimitant avec le corps une chambre intérieure dans laquelle coulisse le piston du vérin.

Mais toutes ces solutions ne sont guère satisfaisantes, car elles présentent des inconvénients notamment au regard de l'encombrement et des complications et des coûts de fabrication, et de plus ces solutions ne sont pas avantageuses ni fiables pour ce qui est de la fabrication de vérins très petits ou miniaturisés.

Aussi, l'invention a-t-elle pour but de remédier notamment aux inconvénients ci-dessus en proposant un vérin perfectionné et qui peut être très petit, ce vérin étant très facile et peu coûteux à fabriquer, et présentant une excellente fiabilité de fonctionnement quelle que soit son utilisation.

A cet effet, l'invention a pour objet un vérin perfectionné et formant par exemple un vérin pneumatique très petit, comprenant un corps constitué par deux flasques raccordés par un élément tubulaire dans lequel coulisse un piston relié à une tige ou analogue elle-même montée coulissante au travers d'au moins l'un des deux flasques, caractérisé en ce que les extrémités de l'élément tubulaire, de préférence ovale en section transversale de même que le piston, sont respectivement solidaires des flasques par un double sertissage, à savoir un sertissage desdites extrémités sur les flasques et un sertissage des flasques sur ces extrémités.

Suivant une autre caractéristique de l'invention, les faces en regard des deux flasques comportent chacune un embout à deux épaulements adjacents étagés permettant le double sertissage précité.

Selon encore une autre caractéristique de l'invention, une gorge est ménagée sur l'embout au niveau de la zone de raccordement des deux épaulements afin de permettre, dans un premier temps, le sertissage des extrémités de l'élément tubulaire après emboîtement sur l'épaulement le plus extérieur de l'embout.

Le vérin selon cette invention est encore caractérisé par un rabattement de l'épaulement le plus intérieur de l'embout sur les extrémités de l'élément tubulaire préalablement serti dans la gorge précitée.

Suivant une autre caractéristique de cette invention, le piston ovale coulissant dans l'élément tubulaire est réalisé en une matière plastique surmoulée sur un aimant agencé entre deux entretoises traversées, de même que l'aimant, par la tige précitée.

Les deux faces opposées du piston comportent avantageusement chacune à leur périphérie une lèvre annulaire d'étanchéité prenant appui sur la paroi interne de l'élément tubulaire.

Il est également prévu sur au moins l'une des faces du piston deux ergots ou analogues qui peuvent servir de logement pour un écrou dans lequel se visse l'extrémité de la tige reliée au piston et traversant de manière coulissante l'un des deux flasques du corps de vérin.

Selon un autre mode de réalisation, le piston est traversé par une tige montée coulissante au travers des deux flasques et munie d'un alésage axial permettant le passage d'un fluide quelconque.

Cet alésage axial peut déboucher de part et d'autre des flasques du piston dans les deux chambres définies par ce piston, l'élément tubulaire et les deux flasques, afin de permettre le déplacement du corps de vérin par rapport à ladite tige, ce qui peut être utile dans des applications particulières.

Mais d'autres avantages et caractéristiques de l'invention apparaîtront mieux dans la description détaillée qui suit et se réfère aux dessins annexés, donnés uniquement à titre d'exemple, dans lesquels :

La figure 1 est une vue schématique et en perspective d'un vérin conforme aux principes selon cette invention ;

La figure 2 est une vue en coupe axiale de ce vérin ;

La figure 3 est une vue en coupe suivant la ligne III-III de la figure 2 ;

La figure 4 est une vue en perspective de l'un des flasques ;

La figure 5 est une vue en coupe axiale, agrandie et partielle de l'un des flasques, et illustre la manière dont s'effectue le double sertissage permettant le raccordement des flasques à l'élément tubulaire, seul le premier sertissage de l'élément tubulaire sur l'épaulement le plus extérieur de l'embout étant représenté ;

La figure 6 est une vue en coupe axiale d'un autre mode de réalisation de vérin conforme à cette invention ; et

La figure 7 est une vue en coupe axiale d'encore une variante de réalisation de ce vérin.

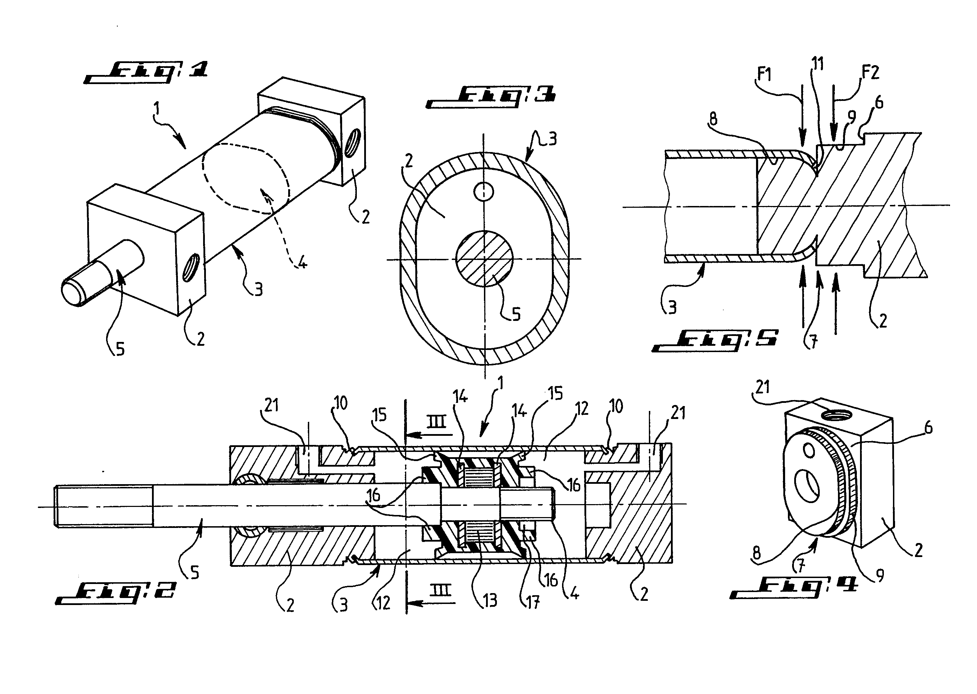

En se reportant aux figures 1, 2, 6 et 7, on voit un vérin comprenant un corps 1 constitué par deux flasques 2 raccordés aux extrémités d'un élément tubulaire 3 dans lequel coulisse un piston 4 relié à une tige 5 elle-même montée coulissante au travers d'au moins l'un des deux flasques 2.

Toutes les dispositions ci-dessus sont bien connues en soi et ne nécessitent pas d'explications complémentaires.

Conformément à l'invention, les extrémités de l'élément tubulaire 3 sont respectivement solidaires des flasques 2 grâce à un sertissage double que l'on décrira en détail ci-après.

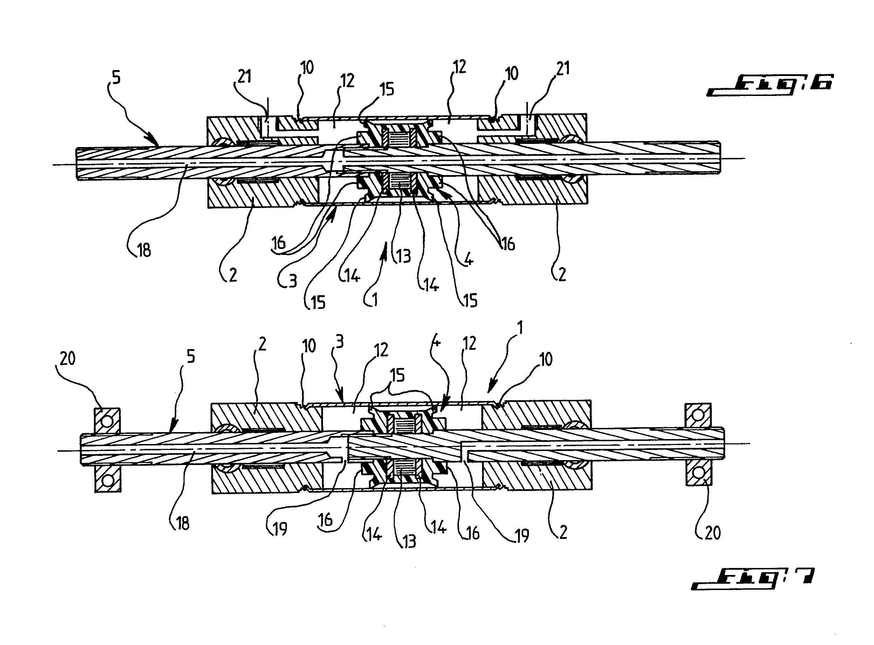

En se reportant plus particulièrement aux figures 4 et 5, on voit que chaque flasque 2 comporte sur l'une 6 de ses faces, à savoir la face qui est en regard de celle de l'autre flasque, un embout 7 comprenant deux épaulements adjacents étagés ou en gradins, à savoir un épaulement 8 qui constitue l'épaulement le plus extérieur de l'embout 7, et un épaulement 9 qui constitue l'épaulement le plus intérieur dudit embout.

On a montré en 10 sur les figures 2, 6 et 7 un rabattement de l'épaulement 9 le plus intérieur, sur les extrémités de l'élément tubulaire 3, après que ces extrémités aient été serties dans une gorge 11 ménagée sur l'embout 7 au niveau de la zone de raccordement des deux épaulements 8 et 9, ladite gorge étant clairement visible sur la figure 5.

Comme on le voit bien sur la figure 3, l'élément tubulaire 3 présente avantageusement une forme ovale en section transversale, de même que le piston 4 qui coulisse dans cet élément tubulaire, lequel piston sera décrit ci-après et est avantageusement immobilisé en rotation dans l'élément tubulaire 3, lors de ses mouvements de va-et-vient dans la chambre 12 définie par l'élément tubulaire 3 et les flasques 2.

Le piston ovale 4 est avantageusement réalisé en une matière plastique appropriée, telle que polyuréthane, surmoulée sur un aimant 13 interposé entre deux entretoises 14 elles aussi noyées dans la matière plastique, comme on le voit bien sur les figures 2, 6 et 7.

Les deux faces opposées du piston 4 comportent chacune à leur périphérie une lèvre annulaire d'étanchéité 15 faisant saillie vers l'extérieur et susceptible de prendre appui sur la paroi interne de l'élément tubulaire 3.

Egalement, les deux faces opposées du piston 4 comportent chacune deux ergots repérés en 16 sur les figures 2, 6 et 7.

Suivant la réalisation montrée sur la figure 2, les deux ergots 16 de l'une des faces du piston 4 servent avantageusement de logement pour un écrou 17 dans lequel est vissée l'extrémité de la tige 5.

Suivant la réalisation illustrée sur la figure 6, la tige 5 traverse de part en part le piston 4 et est montée coulissante au travers des deux flasques 2, dans quel cas les ergots 16 participent en quelque sorte à la fixation de ladite tige 5 sur le piston 4.

Ici, la tige 5 est munie d'un alésage axial 18 permettant le passage d'un fluide quelconque et qui pourra être ainsi acheminé d'un point à un autre, indépendamment des déplacements du piston 4 dans l'élément tubulaire 3.

On retrouve un peu la même structure sur la variante de la figure 7, mais ici l'alésage 18 de la tige 5 débouche en 19 de part et d'autre des faces du piston 4, dans les deux chambres 12 définies par ce piston, l'élément tubulaire 3 et les flasques 2.

La tige 5 est fixée, par vissage par exemple, à ses deux extrémités sur une pièce quelconque 20, et on comprend que l'alimentation en fluide hydraulique ou en air sous pression à une extrémité ou l'autre de la tige 5 commandera le déplacement du corps du vérin 1, dans un sens ou dans l'autre, par rapport à la tige 5 qui reste fixe.

Ce n'est pas le cas des réalisations montrées sur les figures 2 et 6 où les flasques 2 comportent chacun, comme connu en soi, des orifices 21 de communication de la chambre 12 avec une source de fluide appropriée et non représentée. Dans ce cas, c'est le piston 4 et donc la tige 5 attelée à ce piston, qui se déplacent par rapport au corps 1 de vérin, lequel corps est fixe.

Comme cela est connu en soi, des joints d'étanchéité que l'on voit sur les figures 2, 6 et 7 sont prévus entre les flasques 2 et la tige 5, ces joints permettant bien entendu le mouvement de coulissement relatif de la tige 5 et du corps de vérin 1.

Pour une meilleure compréhension de l'invention, on expliquera maintenant en détail comment s'effectue le raccordement des flasques 2 à l'élément tubulaire 3, en se reportant plus particulièrement à la figure 5.

Les extrémités de l'élément tubulaire 3 sont tout d'abord emboîtées sur l'épaulement ovale 8 le plus extérieur de l'embout 7 des flasques 2.

Ensuite, on applique, par moletage par exemple, une force suivant la flèche F1 qui provoquera le sertissage de l'extrémité de l'élément tubulaire et ovale 3 dans la gorge 11.

Puis on déplace les molettes afin d'exercer une force suivant la flèche F2 sur l'épaulement le plus intérieur 9 de l'embout 7, ce qui réalise un rabattement 10 (figures 2, 6 et 7) d'une partie de cet épaulement contre l'extrémité de l'élément tubulaire ovale 3 préalablement sertie dans la gorge 11.

On a donc réalisé suivant l'invention un vérin particulièrement simple et peu coûteux à fabriquer et qui peut trouver de multiples applications exigeant en particulier l'utilisation de vérins d'un encombrement très minime.

Bien entendu, l'invention n'est nullement limitée aux modes de réalisation décrits et illustrés qui n'ont été donnés qu'à titre d'exemple.

C'est ainsi que l'on pourrait parfaitement prévoir sur le corps du vérin des systèmes de détection de la position du piston et coopérant avec l'aimant noyé dans ce piston. A cet égard, on notera que les entretoises de chaque côté de l'aimant non seulement permettent de maintenir correctement l'aimant, mais aussi de réaliser une concentration du champ magnétique.

L'invention comprend tous les équivalents techniques des moyens décrits ainsi que leurs combinaisons si celles-ci sont effectuées suivant son esprit.

**Revendications**

1. Vérin perfectionné et formant par exemple un vérin pneumatique très petit, comprenant un corps (1) constitué par deux flasques (2) raccordés par un élément tubulaire (3) dans lequel coulisse un piston (4) relié à une tige ou analogue (5) elle-même montée coulissante au travers d'au moins l'un des deux flasques (2), caractérisé en ce que le piston (4) coulissant dans l'élément tubulaire (3) et présentant tout comme cet élément une forme ovale en section transversale est réalisé en une matière plastique surmoulée sur un aimant (13) agencé entre deux entretoises (14) traversées, de même que l'aimant, par la tige (5).

2. Vérin selon la revendication 1, caractérisé en ce que les deux faces opposées du piston (4) comportent chacune à leur périphérie une lèvre annulaire d'étanchéité (15) prenant appui sur la paroi interne de l'élément tubulaire (3).

3. Vérin selon la revendication 1 ou 2, caractérisé en ce qu'au moins l'une des faces précitées comporte deux ergots (16) servant de logement pour un écrou (17) dans lequel se visse l'extrémité de la tige précitée (5).

4. Vérin selon la revendication 1 ou 2, caractérisé en ce que le piston précité (4) est traversé par la tige (5) montée coulissante au travers des deux flasques (2) et munie d'un alésage axial (18).

5. Vérin selon la revendication 4, caractérisé en ce que l'alésage précité (18) débouche (19) de part et d'autre des faces du piston (4) dans les deux chambres (12) définies par ce piston, l'élément tubulaire (3) et les deux flasques (2).

Fig. 1

Fig. 3

Fig. 5

Fig. 2

Fig. 4

EP 0 351 317 A1

Fig.6

Fig.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 093 859 (BOSCH) <br> * En entier * <br> --- | 1-3 | F 15 B 15/28 <br> F 15 B 15/14 |
| Y | EP-A-0 264 682 (FESTO) <br> * Résumé; page de garde * <br> --- | 1-3 | |
| A | US-A-3 994 539 (GOTTLIEB) <br> * Colonne 3, ligne 63 - colonne 4, ligne 2 * <br> --- | 4,5 | |
| A | GB-A-2 033 537 (FESTO) <br> --- | | |
| A | FR-A-1 281 714 (BALDWIN) <br> ----- | | |

DOMAINES TECHNIQUES RECHERCHES (Int. Cl.4)

F 15 B

Le présent rapport a été établi pour toutes les revendications

| Lieu de la recherche | Date d'achèvement de la recherche | Examinateur |
|---|---|---|
| LA HAYE | 16-10-1989 | KNOPS J. |